(19) Europäisches Patentamt / European Patent Office / Office européen des brevets

(11) **EP 2 632 976 B1**

(12) **EUROPEAN PATENT SPECIFICATION**

(45) Date of publication and mention
of the grant of the patent:
**04.12.2019 Bulletin 2019/49**

(21) Application number: **11804788.5**

(22) Date of filing: **26.10.2011**

(51) Int Cl.:
*C08J 9/00* *(2006.01)*  *C08J 9/14* *(2006.01)*
*C08J 9/12* *(2006.01)*

(86) International application number:
**PCT/IB2011/002882**

(87) International publication number:
**WO 2012/056320 (03.05.2012 Gazette 2012/18)**

(54) **EXPANDED POLYOLEFIN CONTAINING POWDERED ACTIVATED CARBON AND CARBON BLACK**

EXPANDIERTES POLYOLEFIN ENTHALTEND AKTIVKOHLE IN PULVERFORM UND RUSS

POLYOLÉFINE EXPANSÉE CONTENANT DU CHARBON ACTIF EN POUDRE ET DU NOIR DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2010 US 406773 P**

(43) Date of publication of application:
**04.09.2013 Bulletin 2013/36**

(73) Proprietor: **Kaneka Belgium N.V.**
**2260 Westerlo-Oevel (BE)**

(72) Inventors:
 • **RAVESTYN, Pierre, Van**
  **B-2440 Geel (BE)**
 • **LAEVEREN, Nancy**
  **B-2431 Laakdal (BE)**

(74) Representative: **TBK**
**Bavariaring 4-6**
**80336 München (DE)**

(56) References cited:
**EP-A1- 1 452 559**  **EP-A1- 1 486 530**
**WO-A1-03/074603**

## Description

The present invention relates to a molded article prepared by in-mold forming of pre-expanded polyolefin particles, wherein the pre-expanded polyolefin particles contain powdered activated carbon (PAC), commonly referred to by the acronym PAC, and carbon black. The molded article exhibits excellent thermal insulation property.

The present invention relates to a molded article which exhibits excellent thermal insulation property.

Preferably, the polyolefin has as its main constituent monomer propylene, and a preferred product of the invention is therefore in the class of expanded polypropylenes (EPP).

## Background

The typical properties of molded articles of foamed polypropylene resin (EPP), are a high level of structural strength in relation to the weight of the article, superior chemical resistance, heat resistance, impact resistance and distortion rate after compression. Therefore foamed polypropylene resin is widely used in a number of technical fields, for example, in cushioning packaging material, returnable containers, insulating material or bumper core of an automobile, side impact energy absorber and floor material, building materials, and parts in devices and appliances and others.

The molded articles of foamed polypropylene resin exhibit a certain level of thermal insulation property. However, it is still insufficient. The thermal insulation property is inversely proportional to the thermal conductivity property. And the thermal conductivity of a molded article increases as the density of a molded article increases. Therefore, the maximum molded density of a molded article prepared from pre-expanded polyolefin particles is limited in order to maintain an acceptable level of thermal insulation. Due to this limited maximum molded density, it has been difficult to use EPP particles for some applications which are required to have mechanical strength.

Furthermore, to obtain a good thermal insulation property, the thickness of the molded article is required to be high. Since this molded article requires a higher amount of pre-expanded polyolefin particles for the production of the molded article, also the cost is high.

US6677040 discloses expanded polypropylene (EPP) beads which comprise from 0.002 to 20% by weight of graphite particles in a homogeneous distribution.

EP1486530 discloses a particulate, expandable polystyrene (EPS) which comprises active carbon.

EP1452559 discloses a polyolefin resin expanded particle, containing 0.5 to 20 wt% of carbon black, and containing 0.01 to 10 wt% of specific hindered amine flame retardant.

More in detail, EP1452559 discloses polyolefin resin expanded particles capable of demonstrating excellent flame retarding effects with a small amount of flame retardant content, despite the fact that carbon black is used as a colorant, and polyolefin resin in-mold foamed articles obtained by the in-mold foaming of the expanded particles, which contain 0.5 to 20 wt% of carbon black, and which also contain 0.01 to 10 wt% of a hindered amine flame retardant.

EP1486530 discloses a particulate, expandable polystyrene (EPS) which can be processed into a foam having a fine cell structure and a low density and which, in order to improve the thermal insulation value thereof, contains a thermal insulation value-increasing material, and further a method for preparing a particulate, expandable polystyrene (EPS), as well as a polystyrene-based foam material.

WO03/074603 discloses a propylene polymer foam that contains both a bromine compound, especially an aromatic bromine compound, as a flame retardant additive and an infrared radiation blocking or attenuation compound such as carbon black or graphite and has enhanced resistance to thermal degradation over time due to incorporation of certain stabilizing additives in addition to phenolic-based antioxidants.

## Summary of the invention

It has surprisingly been found, and this is the basis of the present invention, that the incorporation of powdered activated carbon (PAC) and carbon black in an expanded (foamed) polyolefin such as expanded polypropylene (EPP) improves thermal insulation property. In other words, the combination of PAC and carbon black in expanded foamed polyolefin can reduce the thermal conductivity of the expanded foamed polyolefin.

Powdered activated carbon (PAC) is a material having an exceptionally high surface area, in excess of 500 $m^2/g$, obtained by pyrolysis of carbon-based material such as wood, nutshells, peat or coal, optionally combined with chemical activation or oxidation. PAC has a typical particle size of 1 - 150 $\mu$m.

Carbon black is a material produced by incomplete combustion of liquid aromatic hydrocarbons in an oil furnace process. The mean diameter of primary carbon black particles ranges from 8 to 300 nanometers. In the furnace, these primary carbon black particles coalesce to form larger 3-dimensional structures, named primary aggregates. The extent of aggregation can be either low or high, resulting in low structure and high structure grades respectively. The surface area of carbon black is usually around 100 $m^2/g$.

The present inventors have surprisingly found that the addition of carbon black and PAC to polyolefins such as polypropylene can reduce the thermal conductivity of pre-expanded particles and molded articles therefrom. The molded article prepared by in-mold forming of pre-expanded polyolefin particles in the present invention has significantly lower thermal conductivity compared with the conventional molded article.

More specifically, the lambda value of the molded article in the present invention satisfies with the equation (1)

$$Y \leq 0.14X + 28.5$$

Y = Lambda (mW/mK), for a temperature difference of 20°C and a mean test temperature of 10°C and a sample thickness of 50 +/- 5mm

X is Molded Density (g/l)

## Detailed description of the invention

The molded article in the present invention is prepared by in-mold forming of pre-expanded polyolefin particles and the pre-expanded polyolefin particles contain carbon black and powdered activated carbon. As a method to improve thermal insulation property, US6677040 discloses the addition of graphite particles into EPP beads. Although graphite particles can improve thermal insulation property to a certain degree, the improvement by addition of graphite particles is still insufficient. For example, it is reported in US6677040 that the Lambda value of molded article having 30 g/l of molded density prepared from beads comprising propylene-ethylene random copolymer and graphite particle was 34 mW/mK according to DIN 52612.

Carbon black is usually used as a colorant as described in EP1452559. The present inventors already found that the incorporation of PAC in an expanded (foamed) polyolefin such as expanded polypropylene (EPP) increases flame resistance, reducing the horizontal burning rate (U.S. provisional application No. 61/378149) . It has been found that use of carbon black which is a typical colorant in combination with PAC can drastically reduce the thermal conductivity. It is guessed that the network formed by PAC and carbon black in the EPP beads or molded article therefrom relates to the thermal insulation property.

The present inventors have found that use of PAC and carbon black can reduce Lambda value, which indicates thermal conductivity, of an in-mold foamed polyolefin article having 30 g/l of molded density, by 1.5 mW/(mK) versus the Lambda value of a molded article having equal molded density prepared from beads comprising propylene-ethylene random copolymer and graphite particle, as mentioned in US6677040. Since this is a reduction of about 5%, the thickness of the molded article can be reduced by a significant equivalent amount of 5% in each dimension of the article. This is significant reduction.

Molded articles in the present invention have the low Lambda value as compared with conventional molded articles of foamed polypropylene resin. The lambda value Y satisfies with the equation (1)

$$Y \leq 0.14X + 28.5$$

Y = Lambda (mW/mK), X is Molded Density (g/l)
Preferably, the lambda value Y satisfies with the equation (2)

$$0.14X + 25.0 < Y \leq 0.14X + 28.5$$

As the Lambda value decreases with decrease in molded density, it is remarkable that the combination of PAC and carbon black can reduce the Lambda value of a molded product even in the low molded density range, for example, 20 to 60 g/l.

The pre-expanded polyolefin particles containing PAC and carbon black are processed into in-mold foamed articles according to known methods, like (1) a method that directly uses the pre-expanded particles; or (2) a method that imparts foaming ability by injecting inorganic gas, such as air, into the pre-expanded particles in advance, or (3) a method that fills a mold with pre-expanded particles in a compressed state. Depending on the processing conditions, molded articles having a different molded density can be prepared from the same pre-expanded particles. However, as the molded density increases, the Lambda value also increases. Due to this increase, the maximum molded density has been limited. The beads comprising PAC and carbon black allow the molded article to have a larger maximum molded density without compromising the insulation property and resulting in a higher mechanical strength.

When at least three in-mold foamed articles are prepared from the pre-expanded polyolefin particles, having a different molded density, the lambda value of at least one molded article satisfies with the equation (1)

$$Y \leq 0.14X + 28.5$$

Y = Lambda (mW/mK), X is Molded Density (g/l)

To determine Lambda above described, molded articles having minimum density, maximum density and intermediate densities are prepared from the same beads. The in-mold foamed article having a minimum density is prepared according a method that imparts foaming ability by injecting inorganic gas, such as air, into the pre-expanded particles in advance. The in-mold foamed article having a maximum density is prepared according a method that fills a mold with pre-expanded particles in a compressed state. A number of density ranges are defined by increasing the minimum density with subsequent increments of 10 g/l up till the maximum density. For each density range, an in-mold foamed article is prepared according to any known method as mentioned above. Preferably, all molded articles satisfy with the equation (1).

The polyolefin resins used in the present invention are preferably homopolymers and copolymers of 75 to 100 % by weight, preferably 80 to 100 % by weight, of an acyclic monoolefin monomer and 25 to 0 % by weight, preferably 20 to 0 % by weight of other monomers copolymerizable with the acyclic monoolefin monomer. If the content of the acyclic monoolefin monomer is less than 75 % by weight, the characteristics brought from the acyclic monoolefin monomer are not sufficiently retained.

Examples of the acyclic monoolefin monomer are, for instance, $\alpha$-olefins having 2 to 12 carbon atoms, e.g., ethylene, propylene, butene-1, isobutene, pentene-3, 3-methylbutene-1, hexene-1, 4-methylpentene-1, 3,4-dimethylbutene-1, heptene-1, 3-methylhexene-1, octene-1 and decene-1. The acyclic monoolefins may be used alone or in mixtures thereof.

Examples of the other monomers copolymerizable with the acyclic monoolefin monomer are, for instance, a cyclic olefin such as cyclopentene, norbornene or 1,4,5,8-dimethno-1,2,3,4,4a,8,8a,6-octahydronaphthalene, 5-methylene-2-norbornene, 5-ethylidene-2-norbornene, or a diene such as 1,4-hexadiene, methyl-1,4-hexadiene or 7-methyl-1,6-octadiene, and the like. The other copolymerizable monomers may be used alone or in mixtures thereof. Examples of the polyolefin resins prepared from the above-mentioned acyclic monoolefin monomer and other monomers copolymerizable therewith are, for instance, polyethylene resins such as high density polyethylene, medium density polyethylene, low density polyethylene and linear low density polyethylene; polypropylene resins such as propylene homopolymer and ethylene-propylene copolymer (e.g., copolymer of 1 to 15 % by weight of ethylene and 99 to 85 % by weight of propylene); copolymers of ethylene and/or propylene with other monomers such as propylene-butene copolymer, ethylene-propylene-butene copolymer and ethylene-propylene-diene copolymer; polybutene; polypentene; and the like. Of these, low density polyethylene, linear low density polyethylene, ethylene-propylene random copolymer having an ethylene content of 1 to 15 % by weight and a propylene content of 99 to 85 % by weight and ethylene-propylene-butene copolymer are preferred from the viewpoint that pre-expanded particles having a uniform closed cell structure are easily obtained.

The polyolefin resins may be used alone or in mixtures thereof.

It is preferable that the polyolefin resins have a melt index (MI) of 0.1 to 50 g/10 minutes, especially 0.3 to 40 g/10 minutes. If the MI of the polyolefin resins is less than 0.1 g/10 minutes, the fluidity of the resins at the time of foaming is poor and the foaming is difficult. If the MI is more than 50 g/10 minutes, it is difficult to achieve a high expansion ratio since the fluidity is excessively high and, also, the pre-expanded particles tend to easily shrink after foaming.

MI can be measured in accordance with ASTM D1238 or ISO 1133.

In the present invention, another thermoplastic polymer such as a polymer containing a carboxyl group such as ethylene-acrylic acid-maleic anhydride terpolymer, ethylene-(meth)acrylic acid copolymer or ionomer resin prepared by crosslinking ethylene-(meth)acrylic acid copolymer with metal ion; polyamide such as nylon 6, nylon 6,6 or copolymerized nylon and thermoplastic polyester elastomer such as a block copolymer of polybutylene terephthalate and polytetramethylene glycol may be used with the polyolefin resin.

The pre-expanded particles of the present invention can be prepared from the polyolefin resin composition containing PAC and carbon black in a known manner. For example, the pre-expanded particles can be prepared by melt-kneading a polyolefin resin with PAC and optionally additives, forming the resulting mixture to resin particles, impregnating the resin particles with a volatile blowing agent in an aqueous dispersion medium with stirring under high temperature and high pressure conditions, and releasing the aqueous dispersion into a low pressure zone to thereby expand the particles. The bulk density of the produced pre-expanded particles is preferably from 10 to 200 g/L, especially 20 to 60 g/L, though it varies depending on the presence or absence of a filler used optionally and the density of the resin used. The expansion ratio of the pre-expanded particles is usually from 3 to 90, especially about 5 to about 60. It is preferable that the proportion of closed cells in the pre-expanded particles is not less than 65 %, especially not less than 80 %. It is preferable that an average particle size of the pre-expanded particles is 0.1 to 10 mm, especially 1 to 10 mm.

It is further preferable that, in addition to the characteristics as mentioned above, the pre-expanded particles of the present invention show two fusion peaks on a DSC curve when measured by differential scanning calorimetry (DSC) and the heat of fusion QH of the peak appearing on the higher temperature side is from 1.5 to 25.0 J/g. As a result of having two fusion peak temperatures, the pre-expanded particles can be molded without crosslinking the polyolefin resin. If the heat of fusion QH is less than 1.5 J/g, the dimensional shrinkage of molded articles becomes large and also the mechanical properties of molded articles such as compressive strength are lowered. If the heat of fusion is more than 25.0 J/g, the surface property of molded articles is deteriorated and the internal melt adhesion is also deteriorated to result in lowering of mechanical properties. In particular, in case of using a polypropylene resin as a polyolefin resin, it is preferable that the heat of fusion QH is from 1.5 to 25 J/g, especially 5.0 to 20.0 J/g, more especially 8.0 to 18.0 J/g.

The pre-expanded particles of the present invention preferably show two fusion peak temperatures measured by DSC method. No particular limitation is required for the relationship between these two fusion peak temperatures. However, it is preferable that the difference in temperature between these two fusion peaks is from 10 to 25° C, since the pre-expanded particles are easily fused together when heated for molding in a mold. Although the two fusion peak temperatures vary depending on molecular structure of the base resin, thermal history of the resin, amount of blowing agent, expansion temperature and expansion pressure, the difference between two fusion peak temperatures becomes large if the expansion is conducted on a higher temperature side.

The two fusion peaks appearing on a DSC curve of pre-expanded particles are produced by a change of crystal state of the base resin that occurs when, upon expansion of resin particles, the base resin is heated to a temperature in the vicinity of the melting point of the resin and then quenched. As a result are obtained pre-expanded particles having two fusion peak temperatures.

Although the heat of fusion QH for the high-temperature-side peak of the pre-expanded particles varies depending on the molecular structure of resin and the amount of additives, the heat of fusion QH generally decreases with raising the expansion temperature. Pre-expanded particles having a heat of fusion QH of 1.5 to 25.0 J/g can be easily obtained by the above-mentioned method of the preparation of pre-expanded particles if the heating temperature for the pre-expansion is set within the range of from (Tm-25)°C to (Tm+10)°C wherein Tm is the melting point (°C) of the particles of a base resin (i.e., polyolefin resin). The reason why the expansion temperature is set within the above range is that it is possible to suitably select an optimum expansion temperature in accordance with the kind of polyolefin resin, the amount of blowing agent used and the desired expansion ratio of pre-expanded particles.

Processes for preparing the polyolefin pre-expanded particles will be explained below.

The polyolefin resin is usually processed into a desired particulate shape so as to make it easier to use in pre-expansion, for example, by melting in extruder, kneader, Banbury mixer or roll mill, and forming into particles having a desired shape, such as column, prolate spheroid, sphere, cube or rectangular parallelepiped and having an average particle size of 0.1 to 10 mm, preferably 0.7 to 5 mm. PAC, carbon black and optionally used additives are added to the molten resin in the step of preparing the resin particles.

The process for preparing the polyolefin pre-expanded particles of the present invention is not particularly limited, and known processes are applicable. For example, the pre-expanded particles are produced by a process which comprises dispersing the polyolefin resin particles in an aqueous dispersion medium, typically water, in a pressure vessel to form a dispersion, impregnating the particles with a blowing agent with stirring, heating the dispersion under pressure to a prescribed expansion temperature, and releasing the dispersion into a low pressure zone to thereby expand the particles.

In order to achieve the expansion, volatile blowing agents are used, and can be incorporated by different means. Concerning the chemical nature of the blowing agent, various types of blowing agents are known.

One class of blowing agent is hydrocarbons, which can be linear alkanes such as butane, pentane, hexane, or heptane, or cycloalkanes such as cyclobutane, cyclopentane, or cyclohexane. Halogenated hydrocarbons can be used including chlorodifluoromethane, dichloromethane, dichlorofluoromethane, chloroethane, and dichlorotrifluoroethane. It is also possible to use alkanols, such as methanol, ethanol, n-propanol, isopropanol or n-butanol. Ketones are also known as blowing agents, such as 3,3-dimethyl-2-butanone and 4-methyl-2-pentanone. The use of ethers and esters is also known. Blowing agents which are gases at room temperature such as carbon dioxide, air, nitrogen or noble gases can be used.

Mixtures of the above-mentioned blowing agents can be used.

The amount of the blowing agent is not particularly limited, and is suitably selected according to a desired degree of expansion of the pre-expanded particles to be produced. However, the blowing agent is generally used in an amount of 5 to 50 parts by weight per 100 parts by weight of the polyolefin resin particles.

In the preparation of an aqueous dispersion of polyolefin particles, a dispersing agent such as calcium tertiary phosphate, basic magnesium carbonate or calcium carbonate may be used. A small amount of a surfactant such as sodium dodecylbenzenesulfonate, sodium n-paraffinsulfonate or sodium α-olefinsulfonate may also be used as a dispersing aid. These may be used alone or in mixtures thereof. The amounts of such dispersing agent and surfactant vary depending on the kinds thereof and the kind and amount of the polyolefin particles used. Usually the amount of dispersing agent is from 0.2 to 3 parts by weight per 100 parts by weight of water, and the amount of surfactant is from 0.001 to 0.1 part by weight per 100 parts by weight of water.

The polyolefin particles to be dispersed into an aqueous dispersion medium such as water are generally used in an amount of 20 - 100 parts by weight per 100 parts by weight of water in order to achieve good dispersion into water.

The expanded polyolefin products of the present invention may contain various additives which may be incorporated in the polyolefin at various stages. For example, it is possible to incorporate additives at the same time as the expansion by the blowing agent in the impregnation process involving suspended granules of polyolefin. It is also possible to carry out a specific extrusion process to incorporate additives, either simultaneously with or prior to expansion with a blowing agent.

Usually the polyolefin particles are introduced into a pressure vessel with water and a blowing agent to form an aqueous dispersion of the particles, and impregnated with the blowing agent at an elevated temperature, e.g., a temperature higher than the softening point of the polyolefin resin used. This temperature is preferably between 100°C and 170°C. The dispersion of the particles containing a blowing agent is then heated under pressure to an expansion temperature in the pressure vessel, and then released from the vessel into an atmosphere of lower pressure through an orifice having openings with a diameter of 2 to 10 mm, thereby expanding the polyolefin resin particles to give the polyolefin pre-expanded particles of the present invention.

The expansion temperature is generally from 110 to 160°C.

The expansion pressure is selected primarily according to the prescribed expansion ratio, and is generally from 0.5 to 5 MPa (from 5 to 50 bar).

There is no particular limitation in the pressure vessel used, and any vessel can be used so long as it can withstand the pressures and temperatures noted above. A representative vessel is an autoclave type pressure vessel.

In an alternative extrusion-foaming process, the polyolefin product is melted at a temperature of 120 to 240 °C in a vessel. After a residence time of 1 to 90 minutes, the material is extruded through a die with expansion and is then granulated.

The expanded polyolefin products of the present invention do contain as an additive powdered activated carbon (PAC) and carbon black.

In a preferred process according to the present invention, powdered activated carbon (PAC) and carbon black are incorporated into granules of polyolefin with melting in an extruder. Following this, the material comprising polyolefin, powdered activated carbon (PAC) and carbon black is extruded and then converted into small pellets. The small pellets are then subjected to an expansion process, at a pressure of 5 to 50 bars and at a temperature of 100 to 170°C.

PAC used in the present invention will be explained below. PAC is manufactured from solid organic raw material such as wood, nutshells, peat or coal. These are activated by steam or a chemical process, resulting in a highly porous material and having high surface area and function as a carbonaceous adsorbent.

PAC has a typical particle size of 1 - 150 $\mu$m. PAC used in this invention has a median particle size of 1 - 10$\mu$m.

Preferably, PAC has a typical internal surface area of 500 up to 1500 $m^2$/g.

PAC described above is commercially available, for exmple, as "Norit PAC" (produced by Norit), "Nuchar" (produced by Mead West Vaco), "YAO" and "NV5" (produced by Eurocarb).

It is preferred in the present invention that the percentage by weight of powdered activated carbon (PAC) added, with respect to 100% by weight of total product is 0.1 to 15% by weight, more preferably 0.5 to 12% by weight.

Examples of carbon black used in the present invention are channel black, roller black, furnace black, thermal black, acetylene black, and ketjen black. The mean diameter of primary carbon black particles ranges from 8 to 300 nanometers. In the present invention, the carbon black having the large mean diameter of primary particles size is used; more specifically, the mean diameter of primary carbon black particles is between 50 to 300 nm. It is preferable to choose the carbon black with low degrees of particle aggregates.

The amount of carbon black is not limited. It is preferred that the percentage by weight of carbon black with respect to 100% by weight of total product is 0.01 to 20 % by weight, more preferably 0.5 to 10% by weight. In some applications, some regulations control the amount of carbon black incorporated in the article. In those applications, the upper limit of carbon black is therefore 2.5 % by weight, with respect to 100% by weight of the total components. Even in case that the amount of carbon black is low, the use of carbon black in combination with PAC can impart good thermal insulation property to the pre-expanded polypropylene beads or molded article therefrom. However, preferable lower limit of the amount of carbon black is 0.01% by weight, with respect to 100% by weight of the total components.

PAC and carbon black have different particle size in comparison to each other. Particle size of PAC is larger than the primary particle size of carbon black. Due to this difference, larger particles are trapped by smaller particles and those particles form network structure. It is guessed that the network formed by PAC and carbon black relates to the thermal insulation property.

In addition to the powdered activated carbon (PAC), other known additives for expanded polyolefin materials can also be added. These include dyes, pigments, nucleating agents, stabilizers, flame retardants, lubricants and antistatics, as well as waxes.

Nucleating agents facilitate foaming and allow cell diameters to be controlled, in particular to reduce cell diameter. Nucleating agents that can be used in the present invention include mica, talc, a sodium bicarbonate-citrate mixture, as well as other inorganic species such as pyrogenic silica, natural or synthetic zeolites and (optionally modified) betonites. Organic materials such as paraffins and waxes can also have nucleating effects.

Suspension aids can be used such as tricalciumphosphate, magnesium pyrophosphate, metal carbonates. Other possibilites are polyvinyl alcohol and sulfonate-based surfactants. These materials facilitate the dispersion in the contact reactor of the polyolefin granulate.

Although the use of porous activated carbon has been found by the present inventors to itself have flame retardant effect, it is possible to add further, conventional flame retardants to the composition of the present invention.

As a flame retardant, various types of compound can be used, such as brominated compounds including brominated aliphatic compounds, brominated aromatic compounds, or brominated phosphoric esters, or brominated polymers. The corresponding chlorinated series can also be used. Further known are phosphorus-based compounds such as phosphoric esters, phosphates, polyphosphate salts, and red phosphorus. Amino compound such as melamine formaldehyde, amino phosphate can be used. Silicone oils, and other silicon compounds, such as silicon polymers, silicone elastomers, and silica gel can be used. Inorganic compounds, such as antimony oxide, metal hydroxide, a metallic oxide, metallic carbonate, boron oxide, borate salt, and black lead, can also be used. Combinations of these flame retardants can be used.

Examples of brominated compounds include: hexabromocyclododecane, tris (2,3-dibromopropyl)phosphate, tris (2,3-dibromopropyl)isocyanurate, tetrabromo vinylcyclohexane, tetrabromo cyclooctane, pentabromocyclohexane, a hexabromo-2-butene, tetrabromo nonane, hexabromobenzene, octabromodiphenyl ether, decabromodiphenyl ether, tribromophenol, tetrabromo dihydroxydiphenylmethane, dibromoneopentylglycol diglycidyl ether, dibromo phenyl glycidyl ether, tetrabromobisphenol A and tetrabromobisphenol A-JI (2,3-dibromopropyl ether), tetrabromobisphenol A-JI (glycidyl ether), tetrabromobisphenol S, an ethylenebis tetra bromine phthalimide, brominated polystyrene.

Inorganic flame retardants additives include antimonous oxide, antimony pentoxide, aluminium hydroxide, magnesium hydroxide, a calcium oxide, an aluminum oxide, magnesium oxide, zinc oxide, titanium oxide, tin oxide, a tin oxide hydrate, calcium carbonate, magnesium carbonate, boron oxide, boric acid, zinc borate, boric acid barium, barium metaboric acid, black lead.

Known methods may be used for in-mold foaming of the polypropylene resin pre-expanded particles of the present invention. Examples thereof include (1) a method that directly uses the pre-expanded particles; (2) a method that imparts foaming ability by injecting inorganic gas, such as air, into the pre-expanded articles in advance; and (3) a method that fills a mold with pre-expanded particles in a compressed state.

One example of the method for forming an in-mold foamed article from the propylene resin pre-expanded particles of the present invention includes air-compressing the pre-expanded particles in a pressure vessel in advance to inject air into the particles to thereby impart the foaming ability, filling a mold that can enclose but cannot hermetically seal its interior with the pre-expanded particles, molding the particles with a heating medium such as steam at a heating steam pressure of about 0.2 to 4 MPa (2 to 40 bar) in 3 to 30 seconds of heating time to cause fusion between the polypropylene resin pre-expanded particles, cooling the mold with water to a level that can suppress deformation of the in-mold foamed article after the in-mold foamed article is taken out from the mold, and opening the mold to obtain the in-mold foamed article.

The resulting products show remarkable mechanical stability in view of their very low density.

## EXAMPLES 1 to 6 and Comparative Examples 1 to 8

An ethylene-propylene random copolymer (ethylene content 2.2% by weight, MI 8.0 g/10min) was mixed with PAC, carbon black in amounts shown in table 1. The median particle size of the porous activated carbon used here was about 3 $\mu$m and the internal surface area was about 1000 $m^2$/g. The resulting mixture was kneaded by a twin-screw extruder and formed into resin particles having a weight of 1.2 mg/particle. The melting point of the obtained resin particles was 159.0°C.

A 10 liter pressure vessel was charged with 100 parts of the resin particles, blowing agent in amount shown in table 1 and a dispersion medium (150 parts of water containing 1.3 parts of powdery basic calcium tertiary phosphate and 0.02 parts of sodium n-paraffinsulfonate). The resulting aqueous dispersion was heated to an expansion temperature, shown in table 1. The pressure inside the vessel was then adjusted to a prescribed expansion within the range of 1.8 to 3.2 MPa (18 - 32 bar) introducing blowing agent to the vessel. A valve provided at a lower part or tne pressure vessel was opened and, while maintaining the pressure inside the vessel at that pressure by introducing a nitrogen gas, the aqueous dispersion was released into the atmosphere through an orifice plate having openings of 4.5 mm diameter to give pre-expanded particles. The pre-expanded particles were evaluated. The pre-expanded particles were placed in a pressure vessel and compressed by air pressure, and the compressed particles were filled in a mold having a size of 370 × 370 × 60 mm at a compression rate of at least 10 %. The particles were then heated for 20 seconds with steam

7

of 0.15 to 0.35 MPa (1.5 to 3.5 bar) to fuse them together. The obtained in-mold foamed article was evaluated

The results are in shown in table 1, drawing 1 and Example 5 is a reference example, for which equation (1) is not satisfied.

**METHODS OF EVALUATION**

Thermal conductivity

Thermal conductivity is the intrinsic property of a material which relates its ability to conduct heat. Conduction takes place when a temperature gradient exists in a solid medium. Conductive heat flow occurs in the direction of decreasing temperature. Thermal conductivity is defined as the quantity of heat transmitted through a unit thickness in a direction normal to a surface of unit area due to a unit temperature gradient under steady state conditions and when the heat transfer is dependent only on the temperature gradient. In equation form this becomes the following: Thermal Conductivity = heat x distance / (area x temperature gradient)

Thermal conductivity has been measured according to EN 12667 "Thermal performance of building materials and products. Determination of thermal resistance by means of guarded hot plate and heat flow meter methods. Products of high and medium thermal resistance".
The equipment which was used is a heat flow meter "FOX314" from "Lasercomp". The thickness of the samples was 50 +/- 5 mm.

The temperature gradient was 20°C and the mean temperature of the test was 10°C.

Bulk density of pre-expanded foam particles

A container with a volume V1 of 10 liters (L) was filled with dried pre-expanded particles, and the weight W1 (g) of the particles was exactly measured. The bulk density D (g/L) of the pre-expanded particles was calculated according to the following equation : D = W1/V1 = W1/10.

Density of in-mold foamd articles

The apparent density MD (g/L) of the in-mold foamed article was calculated by dividing the weight W2 (g) of the foamed article by the volume V2 (L) of the foamed article : MD = W2/V2

A number of examples were performed in the manner set out above, giving rise to the following Table of results:

**Table 1**

| | Additive (parts by total weight) | | Expansion temperature | Blowing agent | | Pre-expanded particles | In-mold foamed article | |
|---|---|---|---|---|---|---|---|---|
| | PAC | Carbon black | (°C) | Type | Parts by weight per 100 parts of resin particles | Bulk density (g/L) | Density (g/L) | Lambda (mW/mK) |
| Ex. 1 | 5.4 | 2.5 | 157.0 | Air | 1 | 22 | 25 | 31.7 |
| Ex. 2 | 5.4 | 2.5 | 157.0 | Air | 1 | 27 | 29 | 32.3 |
| Ex. 3 | 5.4 | 2.5 | 157.0 | Air | 1 | 26 | 38 | 33.0 |
| Ex. 4 | 5.4 | 2.5 | 157.0 | Air | 1 | 26 | 44 | 33.9 |
| *Ex. 5 | 5.4 | 2.5 | 157.0 | Air | 1 | 26 | 51 | 35.8 |
| Ex. 6 | 4.0 | 1.0 | 157.0 | Air | 1 | 30 | 36 | 33.2 |
| Comp. Ex. 1 | 0 | 0 | 145.0 | Iso-butane | 10 | 18 | 28 | 37.1 |
| Comp. Ex. 2 | 0 | 0 | 147.0 | Iso-butane | 7 | 27 | 47 | 39.4 |
| Comp. Ex. 3 | 0 | 0 | 149.0 | Iso-butane | 6 | 38 | 62 | 42.6 |
| Comp. Ex. 4 | 0 | 0 | 150.0 | Iso-butane | 5 | 50 | 74 | 43.5 |

(continued)

| | Additive (parts by total weight) | | Expansion temperature | Blowing agent | | Pre-expanded particles | In-mold foamed article | |
|---|---|---|---|---|---|---|---|---|
| | PAC | Carbon black | (°C) | Type | Parts by weight per 100 parts of resin particles | Bulk density (g/L) | Density (g/L) | Lambda (mW/mK) |
| Comp. Ex. 5 | 0 | 2.5 | 146.0 | Iso-butane | 9 | 19 | 31 | 34.4 |
| Comp. Ex. 6 | 0 | 2.5 | 147.0 | Iso-butane | 8 | 27 | 45 | 35.9 |
| Comp. Ex. 7 | 0 | 2.5 | 157.0 | Air | 1 | 38 | 60 | 38.9 |
| Comp. Ex. 8 | 0 | 2.5 | 158.0 | Air | 0.3 | 66 | 86 | 42.7 |
| *Reference Ex. 5 | | | | | | | | |

## Claims

1. Molded article prepared by in-mold forming of pre-expanded polyolefin particles, wherein the pre-expanded polyolefin particles contain carbon black and powdered activated carbon, wherein the powdered activated carbon has a median particle size of 1 - 10 $\mu$m, wherein the carbon black has a mean diameter in primary particle size of 50 - 300 nm and wherein the lambda value of the molded article Y which indicates thermal conductivity satisfies with the equation (1)

$$Y \leq 0.14X + 28.5$$

   Y = Lambda (mW/mK), X is Molded Density (g/L);
   the thermal conductivity is measured according to EN 12667, the equipment which is used is a heat flow meter, the thickness of the samples is 50 +/- 5 mm, the temperature gradient is 20°C and the mean temperature of the test is 10°C; and
   wherein the apparent density MD (g/L) of the in-mold foamed article is calculated by dividing the weight W2 (g) of the foamed article by the volume V2 (L) of the foamed article : MD = W2/V2.

2. Molded article according to claim 1, wherein the pre-expanded polyolefin particle has a bulk density D of from 10 to 200 g/L, wherein the bulk density D (g/L) of pre-expanded particles is obtained by filling a container with a volume V1 of 10 liters (L) with dried pre-expanded particles, measuring the weight W1 (g) of the particles, and calculating the bulk density D (g/L) according to the following equation: D = W1/V1.

3. Molded article according to claim 1 or 2, in which the amount of powdered activated carbon is between 0.1 to 15 % by weight, with respect to 100% by weight of the total components.

4. Molded article according to any of claims 1 to 3, in which the amount of carbon black is between 0.01 to 20 % by weight, with respect to 100% by weight of the total components.

5. Molded article according to claim 4, in which the amount of carbon black is between 0.01 to 2.5 % by weight, with respect to 100% by weight of the total components.

6. Molded article according to any of claims 1 to 5, in which powdered activated carbon and carbon black mutually form network; and
   wherein the network is formed by powdered activated carbon and carbon black in such a manner that powdered activated carbon is trapped by the carbon black.

7. Molded article according to any of claims 1 to 6, wherein the polyolefin is selected from polypropylene, polyethylene, or ethylene - propylene copolymers.

8. Molded article according to claim 1, wherein the Molded Density of the molded article is in the range of 20 to 60 g/l.

**Patentansprüche**

1. Formkörper hergestellt durch In-Mold-Formen von vorgeschäumten Polyolefinteilchen, wobei die vorgeschäumten Polyolefinteilchen Ruß und pulverförmige Aktivkohle enthalten, wobei die pulverförmige Aktivkohle eine mittlere Teilchengröße von 1-10 $\mu$m aufweist, wobei der Ruß einen mittleren Durchmesser in Primärteilchengröße von 50-300 nm aufweist und wobei der Lambda-Wert des Formkörpers Y, welcher Wärmeleitfähigkeit angibt, die folgende Gleichung erfüllt (1)

$$Y \leq 0{,}14X + 28{,}5$$

Y = Lambada (mW/mK), X ist Formdichte (g/L);
die Wärmeleitfähigkeit gemäß EN 12667 gemessen ist, das verwendete Gerät ein Wärmestrommesser ist, die Dicke der Proben 50 +/- 5 mm ist, der Temperaturgradient 20°C ist und die mittlere Temperatur des Tests 10°C ist; und
wobei die scheinbare Dichte MD (g/L) des In-Mold-geschäumten Körpers berechnet ist durch Teilen des Gewichts W2 (g) des geschäumten Körpers durch das Volumen V2 (L) des geschäumten Körpers: MD = W2/V2.

2. Formkörper nach Anspruch 1, wobei das vorgeschäumte Polyolefinteilchen eine Schüttdichte D von 10 bis 200 g/L aufweist, wobei die Schüttdichte D (g/L) des vorgeschäumten Teilchens erhalten wird durch Füllen eines Containers mit einem Volumen V1 von 10 Litern (L) mit getrockneten vorgeschäumten Teilchen, Messen des Gewichts W1 (g) der Teilchen und Berechnen der Schüttdichte D (g/L) gemäß der folgenden Gleichung: D = W1/V1.

3. Formkörper nach Anspruch 1 oder 2, in welchem die Menge der pulverförmigen Aktivkohle zwischen 0,1 bis 15 Gew.-% in Bezug auf 100 Gew.-% der gesamten Komponenten ist.

4. Fremdkörper nach einem der Ansprüche 1 bis 3, in welchem die Menge an Ruß zwischen 0,01 bis 20 Gew.-% in Bezug auf 100 Gew.-% der gesamten Komponenten ist.

5. Fremdkörper nach Anspruch 4, in welchem die Menge an Ruß zwischen 0,01 bis 2,5 Gew.-% in Bezug auf 100 Gew.-% der gesamten Komponenten ist.

6. Formkörper nach einem der Ansprüche 1 bis 5, in welchem pulverförmige Aktivkohle und Ruß gemeinsam ein Netzwerk bilden;
wobei das Netzwerk von pulverförmiger Aktivkohle und Ruß in solch einer Art gebildet ist, dass pulverisierte Aktivkohle von Ruß eingeschlossen ist.

7. Formkörper nach einem der Ansprüche 1 bis 6, wobei das Polyolefin von Polypropylen, Polyethylen, oder Ethylen-Propylen-Copolymeren ausgewählt ist.

8. Formkörper nach Anspruch 1, wobei die Formteildichte des Formkörpers in dem Bereich von 20 bis 60 g/l ist.

**Revendications**

1. Article moulé préparé par formation dans un moule de particules de polyoléfine pré-expansées, dans lequel les particules de polyoléfine pré-expansées contiennent du noir de carbone et du charbon actif en poudre, dans lequel le charbon actif en poudre a une granulométrie médiane de 1 à 10 $\mu$m, dans lequel le noir de carbone a un diamètre moyen en granulométrie primaire de 50 à 300 nm et dans lequel la valeur lambda de l'article moulé Y, qui indique la conductivité thermique, satisfait à l'équation (1)

$$Y \leq 0{,}14X + 28{,}5$$

Y = lambda (mW/mK), X est la masse volumique à l'état moulé (g/L) ;
la conductivité thermique est mesurée conformément à la norme EN 12667, l'équipement utilisé est un fluxmètre thermique, l'épaisseur des échantillons est de 50 ± 5 mm, le gradient de température est de 20 °C et la température moyenne du test est de 10 °C ; et
dans lequel la masse volumique apparente MD (g/L) de l'article expansé dans un moule est calculée par division du poids W2 (g) de l'article expansé par le volume V2 (L) de l'article expansé : MD = W2/V2.

2. Article moulé selon la revendication 1, dans lequel la particule de polyoléfine pré-expansée a une masse volumique apparente D de 10 à 200 g/L, dans lequel la masse volumique apparente D (g/L) des particules pré-expansées est obtenue par remplissage d'un récipient ayant un volume V1 de 10 litres (L) avec des particules pré-expansées séchées, mesure du poids W1 (g) des particules, et calcul de la masse volumique apparente D (g/L) conformément à l'équation suivante : D = W1/V1.

3. Article moulé selon la revendication 1 ou 2, dans lequel la quantité de charbon actif en poudre est comprise entre 0,1 et 15 % en poids pour 100 % en poids des composants totaux.

4. Article moulé selon l'une quelconque des revendications 1 à 3, dans lequel la quantité de noir de carbone est comprise entre 0,01 et 20 % en poids pour 100 % en poids des composants totaux.

5. Article moulé selon la revendication 4, dans lequel la quantité de noir de carbone est comprise entre 0,01 et 2,5 % en poids pour 100 % en poids des composants totaux.

6. Article moulé selon l'une quelconque des revendications 1 à 5, dans lequel le charbon actif en poudre et le noir de carbone forment mutuellement un réseau ; et
dans lequel le réseau est formé par le charbon actif en poudre et le noir de carbone de telle manière que le charbon actif en poudre soit piégé par le noir de carbone.

7. Article moulé selon l'une quelconque des revendications 1 à 6, dans lequel la polyoléfine est choisie parmi le polypropylène, le polyéthylène, et les copolymères d'éthylène-propylène.

8. Article moulé selon la revendication 1, dans lequel la masse volumique à l'état moulé de l'article moulé est située dans la plage allant de 20 à 60 g/l.

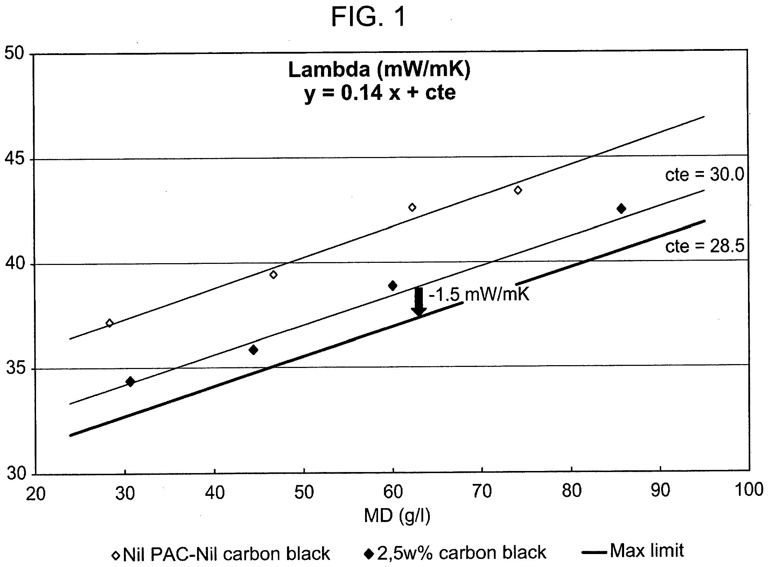

## FIG. 1

EP 2 632 976 B1

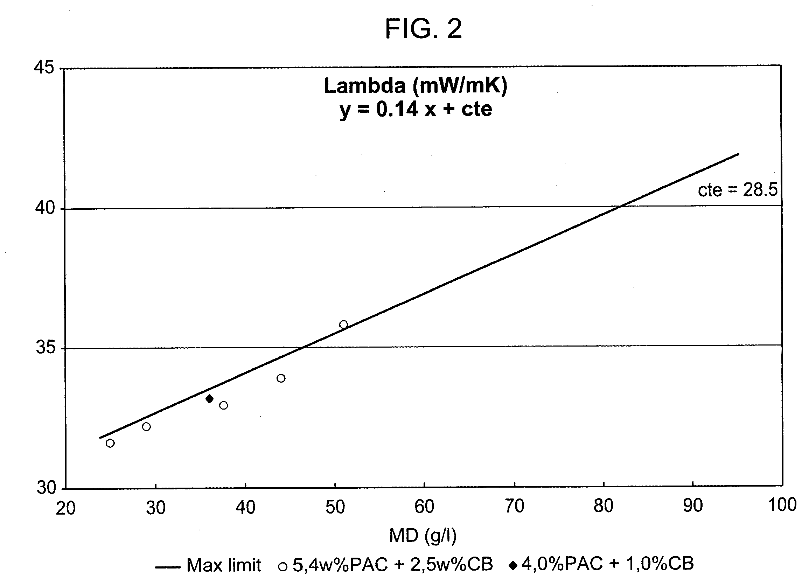

# FIG. 2

**Lambda (mW/mK)**
**y = 0.14 x + cte**

cte = 28.5

MD (g/l)

—— Max limit    o 5,4w%PAC + 2,5w%CB    ◆ 4,0%PAC + 1,0%CB

EP 2 632 976 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6677040 B
- EP 1486530 A
- EP 1452559 A
- WO 03074603 A
- US 61378149